# EUROPEAN PATENT APPLICATION

(11) **EP 3 471 455 A1**
(43) Date of publication of application: **17.04.2019**
(21) Application number: 18186709.4
(22) Date of filing: 02.06.2011
(51) Int. Cl.: H04W 28/00

(54) **METHOD, DEVICE AND SYSTEM FOR DATA TRANSMISSION**

(30) Priority: 13.08.2010 CN 201010254369
(62) Divisional of application: 11783079.4
(71) Applicant: Huawei Technologies Co., Ltd., Shenzhen, Guangdong 518129 (CN)
(72) Inventor: WANG, Jingyu, Shenzhen, Guangdong 518129 (CN); WU, Junyi, Shenzhen, Guangdong 518129 (CN); ZHAO, Yongxiang, Shenzhen, Guangdong 518129 (CN); QIAN, Mingsheng, Shenzhen, Guangdong 518129 (CN); WEI, Anni, Shenzhen, Guangdong 518129 (CN); WANG, Hui, Shenzhen, Guangdong 518129 (CN); CAI, Liebin, Shenzhen, Guangdong 518129 (CN)
(74) Representative: Pfenning, Meinig & Partner mbB

(57) **Abstract**

Embodiments of the present invention disclose a method for data transmission, which is used to increase resource utilization. The method according to the embodiments of the present invention includes: receiving, by a media processing device, a service request sent by a user equipment, where the media processing device is located at a radio access network where the user equipment is located; obtaining, by the media processing device, service data corresponding to the service request; obtaining, by the media processing device, air interface resource information of a cell where the user equipment is located and/or transmission resource information; and performing, by the media processing device, content adaptation and/or bit rate selection on the service data according to the obtained air interface resource information and/or transmission resource information. The embodiments of the present invention further disclose a system and a relevant device for data transmission.

## Description

This application claims priority to Chinese Patent Application No. 201010254369.7, filed with the Chinese Patent Office on August 13, 2010 and entitled "METHOD, DEVICE AND SYSTEM FOR DATA TRANSMISSION", which is incorporated herein by reference in its entirety.

### FIELD OF THE INVENTION

The present invention relates to the field of communications technologies, and in specific, to a method, a device and a system for data transmission.

### BACKGROUND OF THE INVENTION

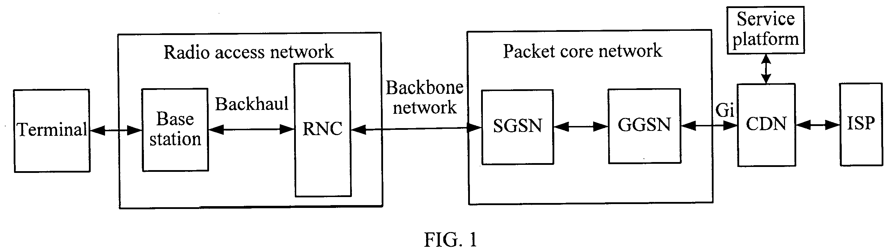

Referring to FIG. 1, a conventional universal mobile telecommunications system (UMTS, Universal Mobile Telecommunications System)/high speed packet access (HSPA, High Speed Packet Access) media network architecture includes: a radio access network (RAN, Radio Access Network), a backhaul (Backhaul) transmission network, a backbone (Backbone) transmission network, a packet switch (PS, Packet Switch) core network, a content distributed network (CDN, Content Distributed Network), a service platform and an Internet service provider.

The RAN includes a base station (NodeB) and a radio network controller (RNC, Radio Network Controller), and the PS core network includes a serving general packet radio service support node (SGSN, Serving GPRS Support Node) and a gateway general packet radio service support node (GGSN, Gateway GPRS Support Node).

When a user equipment requests that a PS service should be performed, the service request reaches a service platform through the RAN, a Backbone transmission network, the PS core network and the CDN, and the service platform obtains corresponding service data from an Internet service provider (Internet SP) according to the service request, or obtains corresponding cache service data from the CDN, and sends the service data to the user equipment through the CDN, the PS core network, the Backbone transmission network and the RAN.

Before the service data is sent to the user equipment, in order to increase network resource utilization, the user equipment in the prior art or the CDN in the prior art performs content adaptation and/or bit rate selection according to a resource condition between the user equipment and the network.

However, the resource condition between the user equipment and the network may be embodied in air interface resource information of a cell where the user equipment is located and transmission resource information, and no matter whether the user equipment or the CDN obtains the resource information, certain hysteresis exists, and the air interface resource information and the transmission resource information usually change very quickly, so that the performing, by the user equipment or the CDN, the content adaptation and/or the bit rate selection makes a result of the adaptation and the selection unable to precisely correspond to a current resource state, thus reducing the resource utilization.

### SUMMARY OF THE INVENTION

Embodiments of the present invention provide a method, a device and a system for data transmission, which are used to increase resource utilization.

According to an aspect, a method for data transmission is provided, where the method includes: receiving, by a media processing device, a service request sent by a user equipment, where the media processing device is located at a radio access network where the user equipment is located; obtaining, by the media processing device, service data corresponding to the service request; obtaining, by the media processing device, air interface resource information of a cell where the user equipment is located and/or transmission resource information; and performing, by the media processing device, content adaptation and/or bit rate selection on the service data according to the obtained air interface resource information and/or transmission resource information.

According to another aspect, a method for data transmission is provided, where the method includes: obtaining, by a policy and charging rules function (PCRF) entity, terminal information of a user equipment; generating, by the PCRF entity, a user policy according to the terminal information; and sending, by the PCRF entity, the user policy to a media processing device, where the media processing device is located at a radio access network where the user equipment is located.

According to another aspect, a media processing device is provided, the media processing device is located at a radio access network where a user equipment is located, and the media processing device includes: a receiving unit, configured to receive a service request sent by the user equipment; a first obtaining unit, configured to obtain service data corresponding to the service request received by the receiving unit; a second obtaining unit, configured to obtain air interface resource information of a cell where the user equipment is located and/or transmission resource information; and a data processing unit, configured to perform, according to the air interface resource information obtained by the second obtaining unit and/or the transmission resource information obtained by the second obtaining unit, content adaptation and/or bit rate selection on the service data obtained by the first obtaining unit.

According to another aspect, a policy and charging rules function (PCRF) entity is provided, where the PCRF entity includes: an information obtaining unit, configured to obtain terminal information of a user equipment; a generating unit, configured to, according to the terminal information obtained by the information obtaining unit, generate a user policy; and a policy sending unit, configured to send the user policy generated by the generating unit to a media processing device, where the media processing device is located at a radio access network where the user equipment is located.

According to another aspect, a system for data transmission is provided, where the system includes: a media processing device and a PCRF entity.

It can be seen from foregoing technical solutions that, the embodiments of the present invention have the following advantages:
In the embodiments of the present invention, the media processing device performs content adaptation and/or bit rate selection, and the media processing device is located at the radio access network, so it is more timely and precise to obtain radio air interface resource information and/or transmission resource information from the radio access network, thus increasing resource utilization.

### BRIEF DESCRIPTION OF THE DRAWINGS

FIG. 1 is a schematic structural diagram of a network in the prior art;
FIG. 2 is a schematic structural diagram of a network according to an embodiment of the present invention;
FIG. 3 is a schematic diagram of an embodiment of a method for data transmission according to the present invention;
FIG. 4 is a schematic diagram of another embodiment of a method for data transmission according to the present invention;
FIG. 5 is a schematic diagram of another embodiment of a method for data transmission according to the present invention;
FIG. 6 is a schematic diagram of another embodiment of a method for data transmission according to the present invention;
FIG. 7 is a schematic diagram of another embodiment of a method for data transmission according to the present invention;
FIG. 8 is a schematic diagram of an embodiment of a media processing device according to the present invention;
FIG. 9 is a schematic diagram of another embodiment of a media processing device according to the present invention;
FIG. 10 is a schematic diagram of an embodiment of a PCRF entity according to the present invention; and
FIG. 11 is a schematic diagram of an embodiment of a system for data transmission according to the present invention.

### DETAILED DESCRIPTION OF THE EMBODIMENTS

Embodiments of the present invention provide a method, a system and a relevant device for data transmission, which are used to increase resource utilization.

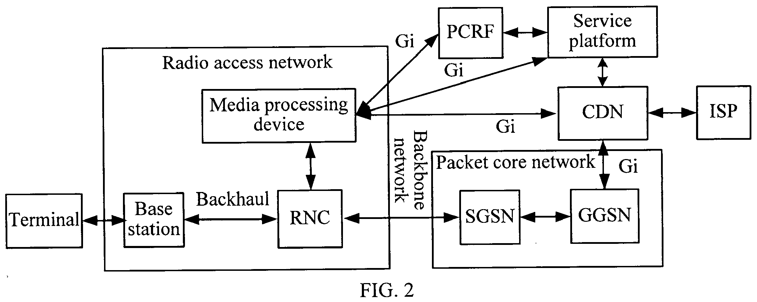

Referring to FIG. 2, a network structure according to an embodiment of the present invention may include:
a radio access network, a packet switch core network, a backbone transmission network, a content distributed network (CDN), a service platform and an Internet service provider, and optionally, may further include a policy and charging rules function (PCRF, Policy and Charging Rules Function) entity.

The radio access network and the packet switch core network are connected through the backbone transmission network. The packet switch core network communicates with the CDN through a Gi interface. A media processing device respectively communicates with the service platform and the CDN through the Gi interface, and optionally, the media processing device may further communicate with the PCRF entity through the Gi interface.

The radio access network includes a base station, an RNC and the media processing device, and the base station and the RNC may be configured to complete radio access of a user; the media processing device may be configured to locally cache service data requested by a user equipment, and send the cached data to the user equipment through the radio access network, and optionally, the media processing device may be further configured to accelerate a media service, and perform content adaptation and/or bit rate selection on service data to be sent. The media processing device may be located at an RNC side, may be built in the RNC, and may also be set independently of the RNC. Each RNC may correspond to a media processing device, and multiple RNCs may also correspond to a media processing device.

The packet switch core network includes an SGSN and a GGSN, and may be configured to complete access authentication of a PS user.

The service platform may be configured to complete user service access management.

The CDN may be configured to complete service storage and sending and redirect the user equipment to a corresponding media processing device.

The PCRF entity may be configured to generate a user policy, and deliver the user policy to the corresponding media processing device.

It should be noted that, the network structure shown in FIG. 2 may also be applicable to subsequent embodiments of the present invention, and solutions according to all embodiment of the present invention are not only applicable to a UMTS network, but also applicable to a network of another type, such as a long term evolution network, which is not repeatedly described subsequently.

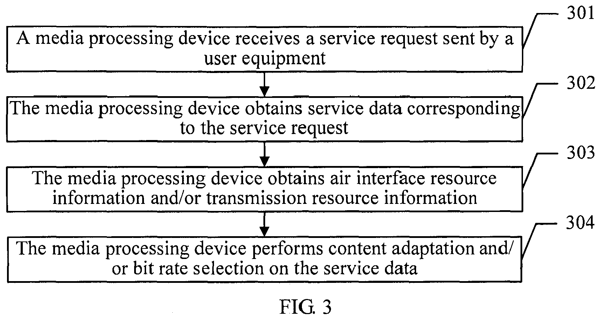

A method for data transmission according to an embodiment of the present invention is described in detail below; referring to FIG. 3, a specific example of the method for data transmission according to the embodiment of the present invention includes:
Step 301: A media processing device receives a service request.

When the user equipment initiates the service request to a network side to request that a service should be performed, the media processing device may obtain the service request sent by the user equipment; the service described in this embodiment and subsequent embodiments may be a packet service, for example, in practical applications, may be a mobile data service, a video service, or an audio service, which is not specifically limited here.

It should be noted that, in this embodiment, the media processing device is located at a radio access network where the user equipment is located.

Step 302: The media processing device obtains service data.

After receiving the service request, the media processing device may obtain service data corresponding to the service request; specific manners for obtaining the service data may be diverse, and are described in detail in a subsequent embodiment.

Step 303: The media processing device obtains air interface resource information and/or transmission resource information.

After obtaining the service data, the media processing device may obtain air interface resource information of a cell where the user equipment is located and/or transmission resource information, that is, may obtain the air interface resource information of a cell where the user equipment is located, or obtain the transmission resource information, or obtain both the air interface resource information of a cell where the user equipment is located and the transmission resource information.

For example, the media processing device may obtain the information from an RNC, and may also obtain the information from another network element of the radio access network such as an evolved base station, which is not specifically limited here.

Step 304: The media processing device performs content adaptation and/or bit rate selection on the service data.

After obtaining the air interface resource information and/or the transmission resource information, the media processing device performs content adaptation and/or bit rate selection on the service data, that is, may perform the content adaptation, or may perform the bit rate selection, or may perform both the content adaptation and the bit rate selection.

In this embodiment, the media processing device performs content adaptation and/or bit rate selection, and the media processing device is located at the radio access network, so it is more timely and precise to obtain radio air interface resource information and/or transmission resource information from the radio access network, thus increasing resource utilization.

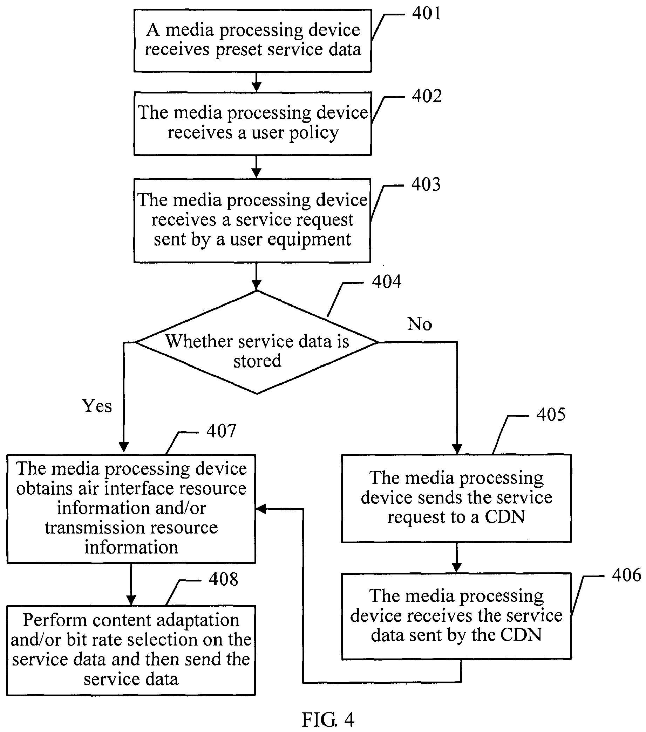

For convenience of understanding, the method for data transmission according to the embodiment of the present invention is described below with another embodiment; specifically, referring to FIG. 4, another embodiment of the method according to the present invention includes:
Step 401: A media processing device receives preset service data.

It should be noted that, in this embodiment, the media processing device is located at a radio access network where a user equipment is located. The preset service data may be part of the most popular service data, and may also be service data requested by a specific user equipment, which is not limited here.

After the media processing device receives the preset service data sent by the CDN, the preset service data may be stored, for example, the preset service data may be locally cached.

Step 402: The media processing device receives a user policy.

The user policy may be generated by a policy and charging rules function (PCRF) entity according to terminal information of the user equipment.

For example, the terminal information may include information such as a terminal type, a terminal operating system, and/or a terminal software version, and the terminal information may be sent by a service platform to the PCRF entity, and may also be obtained by the PCRF entity through querying an equipment identity register (EIR) according to international mobile equipment identity (IMEI) information of a terminal, where the IMEI information of the terminal is sent by the radio access network to the PCRF entity, which is not limited here.

In this embodiment, for example, an RNC may report the IMEI information to the PCRF entity, and it can be understood that, in practical applications, likewise, another network element of the radio access network may report the IMEI information to the PCRF entity.

After obtaining the terminal information, the PCRF entity may generate a user policy, and may perform corresponding service processing for different user priority information, and different quality of service (QoS, Quality of Service) information according to the user policy.

It should be noted that, besides generating the user policy according to the terminal information, the PCRF entity may further obtain subscription information of the user from a home user register, and in combination with the subscription information, generate a user policy.

In this embodiment, the media processing device may be integrated in the RNC, or be integrated in an evolved base station, and in this case, the media processing device may obtain the user policy in the following manners.

When the media processing device is integrated in the RNC, the media processing device may receive a radio access bearer (RAB, Radio Access Bearer) allocation request sent by the PCRF, where the RAB allocation request includes an RAB parameter field, the RAB parameter field includes an allocation/retention priority (ARP, Allocation/Retention Priority), and the media processing device may use the ARP as the user policy after obtaining the ARP.

When the media processing device is integrated in the evolved base station, the media processing device may receive an evolved radio access bearer (eRAB, evolved Radio Access Bearer) allocation request sent by the PCRF, where the eRAB allocation request includes an eRAB parameter field, the eRAB parameter field includes an ARP, and the media processing device may use the ARP as the user policy after obtaining the ARP.

The media processing device may obtain the user policy generated by the PCRF entity from the PCRF entity.

If the media processing device and the RNC or the evolved base station are respectively implemented independently, the RNC or the evolved base station may obtain an ARP in the foregoing manner, and subsequently, the media processing device may obtain the ARP from the RNC or the evolved base station, and the specific obtaining manner is not limited here.

Step 403: The media processing device receives a service request sent by the user equipment.

When the user equipment initiates the service request to a network side to request that a service should be performed, the media processing device may obtain the service request sent by the user equipment.

The service in this embodiment may specifically be a packet service.

Step 404: The media processing device judges whether service data corresponding to the service request is stored, and if service data corresponding to the service request is stored, the process proceeds to step 407; if service data corresponding to the service request is not stored, the process proceeds to step 405.

After the media processing device receives the service request sent by the user equipment, the service data corresponding to the service request may be determined, and then the media processing device may judge whether the service data is stored, for example, judge whether the service data corresponding to the service request is cached locally.

Step 405: The media processing device sends the service request to a CDN.

When the media processing device determines that the corresponding service data is not stored, the media processing device forwards the service request to the CDN.

Step 406: The media processing device receives the service data sent by the CDN and the process proceeds to step 407.

In this embodiment, because the CDN may store the corresponding service data, after sending the service request to the CDN, the media processing device may receive the corresponding service data from the CDN.

After receiving the corresponding service data from the CDN, the media processing device may further judge whether the service data satisfies a preset condition, if the service data satisfies a preset condition, the service data may be stored in the media processing device locally, and in practical applications, a specific preset condition, for example, may be that a service popularity degree reaches a threshold, which is not specifically limited here.

Step 407: The media processing device obtains air interface resource information and/or transmission resource information.

After determining that the service data is stored and the service data is obtained locally, or the service data is obtained from the CDN, the media processing device may obtain air interface resource information of a cell where the user equipment is located and/or transmission resource information, that is, may obtain the air interface resource information of a cell where the user equipment is located, or obtain the transmission resource information, or obtain both the air interface resource information of a cell where the user equipment is located and the transmission resource information.

For example, the media processing device may obtain the information from the RNC, and may also obtain the information from another network element of the radio access network, such as an evolved base station, which is not specifically limited here.

Step 408: The media processing device performs content adaptation and/or bit rate selection on the service data and then sends the service data.

After obtaining the air interface resource information and/or the transmission resource information, the media processing device performs content adaptation and/or bit rate selection on the service data, that is, may perform the content adaptation, or may perform the bit rate selection, or may perform both the content adaptation and the bit rate selection. After obtaining the air interface resource information and/or the transmission resource information, the media processing device may also, in combination with the previously-obtained user policy, or further in combination with service information, perform the content adaptation and/or the bit rate selection on the service data.

In this embodiment, corresponding service processing may be performed according to the user policy for different user priority information, and different QoS information, so the media processing device may perform the content adaptation and/or the bit rate selection according to the air interface resource information and/or the transmission resource information, and according to the user policy.

For example, a user policy of a current user is that "for a gold medal user with the highest priority, when the network environment deteriorates, it is ensured that a service transmission rate of the user is at least 2 Mbit/s, and when the network environment is good, a service transmission rate of the user may be increased to 20 Mbit/s at most"; assume that the current user is requesting that a network video should be played, and after obtaining the air interface resource information and/or the transmission resource information, the media processing device may determine how is the current network environment; if the air interface resource information and/or the transmission resource information are higher than a first threshold, it indicates that the network environment is good, and the service transmission rate of the current user may be increased, that is, a bit rate of the network video requested by the user to be played may be increased, and may reach 20 Mbit/s at most; if the air interface resource information and/or the transmission resource information are lower than a second threshold, it indicates that the network environment deteriorates, and the service transmission rate of the current user needs to be reduced, but it is required to ensure a transmission rate of at least 2 Mbit/s, so the network video requested by the user to be played may be clipped or compressed, thus enabling a bit rate of the network video to be 2 Mbit/s.

For another example, the media processing device may obtain a cache occupancy rate of a buffer of a radio link control (RLC, Radio Link Control) layer, and use the cache occupancy rate of the buffer of the RLC layer as the air interface resource information of a cell where the user equipment is located.

After obtaining the cache occupancy rate of the buffer of the RLC layer, the media processing device may judge whether the cache occupancy rate of the buffer of the RLC layer is higher than a preset first threshold (such as 70%), and if the cache occupancy rate of the buffer of the RLC layer is higher than a preset first threshold, it indicates that a current air interface transmission rate is severely less than a bit rate of the service data, and if the service data is still transmitted at a current bit rate, data in a buffer of the user equipment may be unceasingly reduced, so as to finally cause a service pause, and therefore, the media processing device may reduce the bit rate of the service data, to reduce the cache occupancy rate of the buffer of the RLC layer.

Meanwhile, the media processing device may further judge whether the cache occupancy rate of the buffer of the RLC layer is lower than a preset second threshold (such as 30%), and if the cache occupancy rate of the buffer of the RLC layer is lower than a preset second threshold, it indicates that the current air interface transmission rate is apparently greater than the bit rate of the service data, and in this case, the bit rate of the service data may be increased to improve user experience.

Specific values of the first threshold and the second threshold in this embodiment are only an example, and in practical applications, may be modified according to a specific case, but the first threshold needs to be greater than the second threshold.

In this embodiment, a specific manner of reducing the bit rate of the service data may be: selecting and sending a fragment with a relatively low bit rate of the service data; correspondingly, a specific manner of increasing the bit rate of the service data may be: selecting and sending a fragment with a relatively high bit rate of the service data.

It should be noted that, in practical applications, the media processing device may further implement the bit rate selection in other manners, which is not specifically limited here.

It should be noted that, the content adaptation procedure and/or the bit rate selection procedure in this embodiment are described above only with some examples, and it can be understood that, in practical applications, the media processing device may further perform the content adaptation and/or the bit rate selection according to other manners, and a specific procedure is not limited here.

In this embodiment, the media processing device performs content adaptation and/or bit rate selection, and the media processing device is located at the radio access network, so it is more timely and precise to obtain radio air interface resource information and/or transmission resource information from the radio access network, and further in combination with the user policy, resource allocation may be performed more precisely, thus increasing resource utilization.

Secondly, when the media processing device stores service data which is requested by the user equipment and locally cached, the media processing device directly sends the stored service data to the user equipment through the radio access network, and because the media processing device is located at the radio access network where the user equipment is located, the service data does not need to be transmitted through a core network and a backbone transmission network, thus saving the bandwidth of the backbone transmission network and the traffic of the core network, reducing transmission costs, reducing a service delay, and improving the user experience.

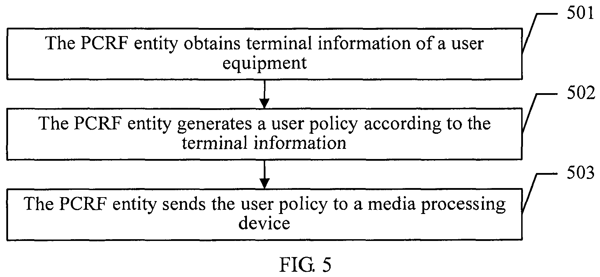

In the following, referring to FIG. 5, another specific example according to the embodiment of the present invention includes:

Step 501: Obtain terminal information of a user equipment.

After the user equipment initiates a service request, a PCRF entity may obtain the terminal information of the user equipment.

In this embodiment, the obtaining the terminal information of the user equipment may be implemented in diverse manners, and a specific implementation manner is described in detail in a subsequent embodiment.

Step 502: Generate a user policy.

After obtaining the terminal information, the PCRF entity may generate a user policy, and may perform corresponding service processing for different user priority information, and different QoS information according to the user policy.

It should be noted that, besides generating the user policy according to the terminal information, the PCRF entity may further obtain subscription information of the user from a home user register, and, in combination with the subscription information, generate a user policy.

Step 503: Send the user policy to a media processing device.

After generating the user policy, the PCRF entity may send the user policy to the media processing device, so that the media processing device may perform content adaptation and/or bit rate selection according to the user policy, and further in combination with air interface resource information and/or transmission resource information.

It should be noted that, in this embodiment, the media processing device is located at a radio access network where a user equipment is located.

In this embodiment, the media processing device may be integrated in an RNC, or be integrated in an evolved base station, and in this case, the PCRF entity may send the user policy to the media processing device in the following manner.

When the media processing device is integrated in the RNC, the PCRF entity may send an RAB allocation request to the RNC where the media processing device is located, where the RAB allocation request includes an RAB parameter field, the RAB parameter field includes an ARP, and the media processing device may use the ARP as the user policy after obtaining the ARP.

When the media processing device is integrated in the evolved base station, the PCRF entity may send an eRAB allocation request to the evolved base station where the media processing device is located, where the eRAB allocation request includes an eRAB parameter field, the eRAB parameter field includes an ARP, and the media processing device may use the ARP as the user policy after obtaining the ARP.

In this embodiment, the PCRF entity generates a user policy and sends the user policy to the media processing device, so that the media processing device can perform content adaptation and/or bit rate selection on the service data according to the user policy, and further in combination with air interface resource information and/or transmission resource information, so as to increase resource utilization.

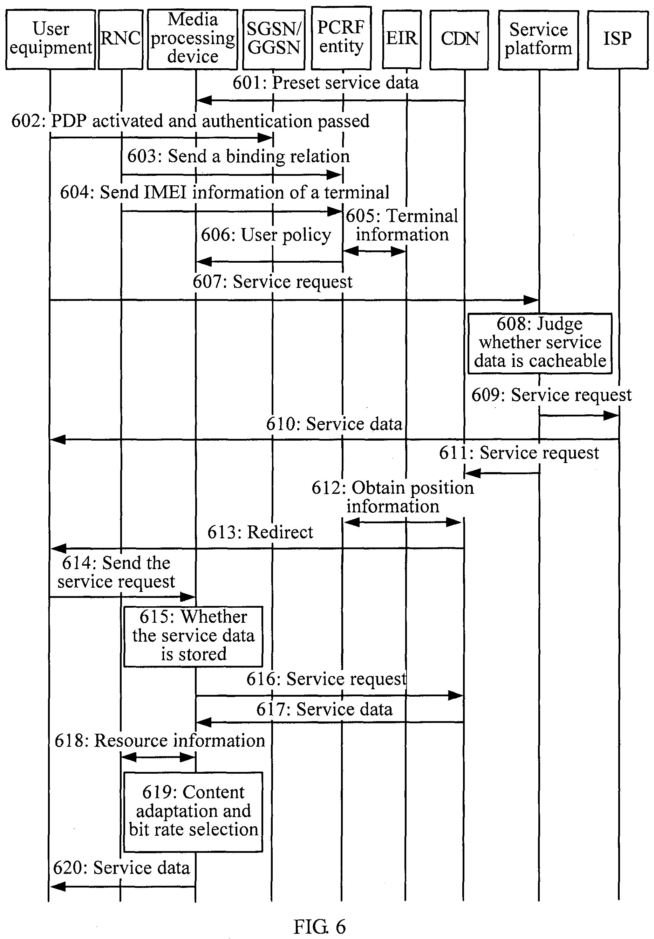

The method for data transmission according to the embodiment of the present invention is described below with a specific example; specifically, referring to FIG. 6, the method includes:

Step 601: A CDN sends preset service data to a media processing device.

It should be noted that, in this embodiment, the media processing device is located at a radio access network where a user equipment is located. The preset service data may be part of the most popular service data, and may also be service data requested by a specific user equipment, which is not limited here.

Step 602: The user equipment initiates PDP activation, and a GGSN performs access authentication on the user equipment.

The user equipment initiates a PDP activation request to an SGSN/GGSN, to request a mobile data service, and the GGSN performs access authentication on the user equipment; if the access authentication passes, the user equipment is allowed to use the service, and a specific access authentication procedure is not limited here.

Step 603: An RNC sends a binding relation.

In this embodiment, because data sent by the user equipment to a network side first all passes through the RNC, the RNC can obtain an IP address of the user equipment.

After obtaining the IP address of the user equipment, the RNC may send a binding relation between the IP address of the user equipment and an RNC where the user equipment is located to a PCRF entity, that is, a binding relation between the user equipment and the RNC serving the user equipment.

Step 604: The RNC sends IMEI information of a terminal.

In this embodiment, the RNC may, after or during sending the binding relation, send the IMEI information of the user equipment to the PCRF entity.

Step 605: The PCRF entity obtains terminal information of the user equipment.

After obtaining the IMEI information sent by the RNC, the PCRF entity may, according to the IMEI information of the user equipment, obtain the terminal information of the user equipment by querying in an EIR; for example, the terminal information may include information of a terminal type, a terminal operating system, and/or a terminal software version.

Step 606: The PCRF entity sends a user policy to the media processing device.

The PCRF entity generates the user policy according to the terminal information of the user equipment, and the meaning of the user policy is the same as that of the user policy described in the embodiment shown in FIG. 4, which is not repeatedly described here.

In this embodiment, a manner in which the media processing device obtains the user policy may be the same as step 402 described in the embodiment shown in FIG. 4, which is not specifically repeated here.

Step 607: The user equipment sends a service request to a service platform.

When the user equipment initiates the service request to the network side to request that a service should be performed, the user equipment sends the service request to the service platform.

The service in this embodiment may specifically be a packet service.

Step 608: The service platform judges whether service data corresponding to the service request is cacheable content.

In this embodiment, after receiving the service request sent by the user equipment, the service platform may determine a service type corresponding to the service request, and thus, determine, according to the service type, whether the service data corresponding to the service request is cacheable content; for example, real-time communication data is non-cacheable content, and on-demand data is cacheable content. When it is determined that the requested service data is not cacheable content, steps 609 and 610 are executed; when it is determined that the requested service data is cacheable content, step 611 is executed.

Step 609: When it is determined that the requested service data is not cacheable content, the service platform sends the service request to an Internet SP.

When the service platform determines that the service data requested by the user equipment is not cacheable content, the Internet SP needs to send a service directly to the user equipment, and the service platform sends the service request to the Internet SP.

Step 610: The Internet SP sends the service data to the user equipment.

After receiving the service request sent by the service platform, the Internet SP obtains corresponding service data according to the service request, and sends the service data to the user equipment, and the data transmission process ends.

Step 611: The service platform sends the service request to the CDN.

When the service platform determines that the service data requested by the user equipment is cacheable content, the service platform sends the service request to the CDN.

Step 612: The CDN queries the PCRF entity to obtain location information of the media processing device corresponding to the user equipment.

After receiving the service request sent by the service platform, the CDN may send a query request to the PCRF entity, to obtain the location informationof the media processing device corresponding to the user equipment.

Because the PCRF obtains the binding relation reported by the RNC previously, the PCRF may obtain, according to the binding information, the RNC where the user equipment is located, and further may obtain, according to the RNC where the user equipment is located, the information of the media processing device corresponding to the user equipment, and feed back the information to the CDN.

Step 613: The CDN redirects the user equipment to the media processing device.

After the location informationof the media processing device is determined, the CDN may redirect the user equipment to the media processing device. For example, the CDN may send a message carrying the location informationof the media processing device to the user equipment, to instruct the user equipment, after the message is received, to send the service request to the media processing device.

Step 614: The user equipment sends the service request to the media processing device.

In this embodiment, because in step 613, the CDN redirects the user equipment to the media processing device, the user equipment sends the service request to the media processing device.

Step 615: The media processing device judges whether the service data corresponding to the service request is stored.

After receiving the service request sent by the user equipment, the media processing device may judge whether the service data corresponding to the service request is stored.

Step 616: When the media processing device does not store the service data requested by the user equipment, the media processing device sends the service request to the CDN.

If the media processing device does not store the corresponding service data, the media processing device may send the service request to the CDN, to request that the corresponding service data should be obtained.

Step 617: The CDN sends the service data to the media processing device.

After receiving the service request of the media processing device, the CDN sends the corresponding service data to the media processing device.

Step 618: The media processing device obtains air interface resource information of a cell where the user equipment is located and/or transmission resource information.

In this embodiment, if the media processing device locally stores the corresponding service data, the media processing device may directly obtain the service data locally, and if the media processing device does not store the corresponding service data locally, the media processing device may obtain the service data from the CDN.

After the media processing device obtains the service data locally, or obtains the service data from the CDN, the media processing device queries the RNC to obtain the air interface resource information of a cell where the user equipment is located and/or the transmission resource information, and the transmission resource information may be transmission resource information of the NodeB to the RNC.

Step 619: The media processing device performs content adaptation and/or bit rate selection on the service data according to the air interface resource information and/or the transmission resource information and according to a user policy.

In this embodiment, the procedure of performing the content adaptation and/or the bit rate selection is consistent with the content described in step 408 in the embodiment shown in FIG. 4, which is not repeatedly described here.

Step 620: The media processing device sends the service data to the user equipment.

After performing the content adaptation and/or the bit rate selection on the service data, the media processing device may send the processed service data to the user equipment.

In this embodiment, the media processing device performs content adaptation and/or bit rate selection, and the media processing device is located at the radio access network, so it is more timely and precise to obtain radio air interface resource information and/or transmission resource information from the radio access network, thus increasing resource utilization.

Secondly, when the media processing device stores service data which is requested by the user equipment and locally cached, the media processing device directly sends the stored service data to the user equipment through the radio access network, and because the media processing device is located at the radio access network where the user equipment is located, the service data does not need to be transmitted through a core network and a backbone transmission network, thus saving the bandwidth of the backbone transmission network and the traffic of the core network, reducing transmission costs, reducing a service delay, and improving user experience.

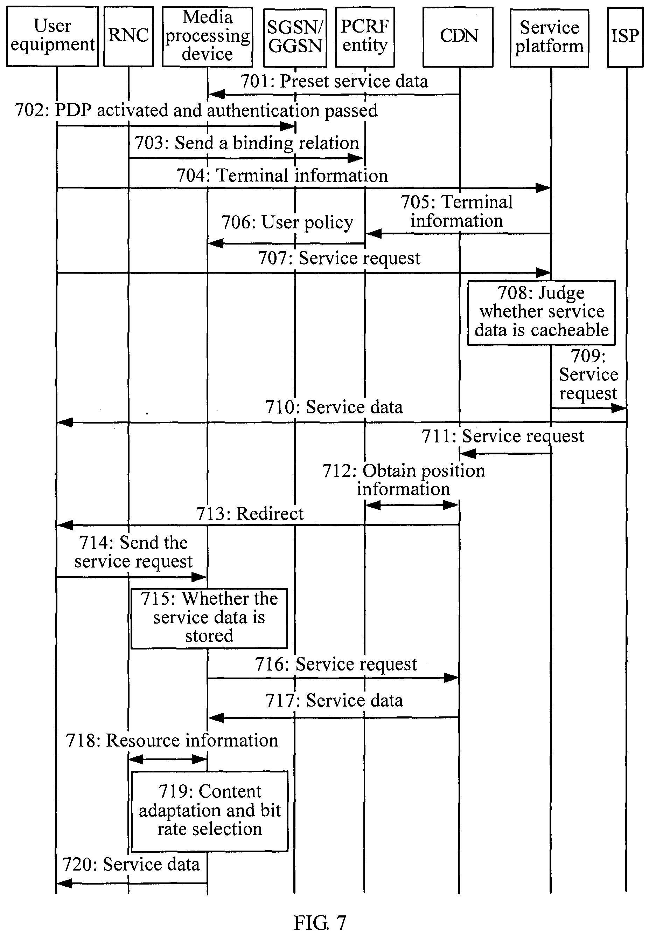

The method for data transmission according to the embodiment of the present invention is described below with another specific example; specifically, referring to FIG. 7, another embodiment of the method according to the present invention includes:

Steps 701 to 703 are the same as steps 601 to 603 in the embodiment shown in FIG. 6, which is not repeatedly described here.

Step 704: The user equipment reports terminal information to a service platform.

When the user equipment is started, the user equipment may report the terminal information of the user equipment to the service platform; for example, the terminal information may include information of a terminal type, a terminal operating system, and/or a terminal software version.

Step 705: The service platform reports the terminal information to a PCRF entity.

After obtaining the terminal information from the user equipment, the service platform may report the terminal information to the PCRF entity.

Steps 706 to 720 are the same as steps 606 to 620 in the embodiment shown in FIG. 6.

In this embodiment and the embodiment shown in FIG. 6, the PCRF entity obtains the terminal information of the user equipment in different manners separately, and it can be understood that, in practical applications, the PCRF entity may further obtain the terminal information in other manners, which is not limited here.

In this embodiment, the media processing device performs content adaptation and/or bit rate selection, and the media processing device is located at the radio access network, so it is more timely and precise to obtain radio air interface resource information and/or transmission resource information from the radio access network, thus increasing resource utilization.

Secondly, when the media processing device stores service data which is requested by the user equipment and locally cached, the media processing device directly sends the stored service data to the user equipment through the radio access network, and because the media processing device is located at the radio access network where the user equipment is located, the service data does not need to be transmitted through a core network and a backbone transmission network, thus saving the bandwidth of the backbone transmission network and the traffic of the core network, reducing transmission costs, reducing a service delay, and improving user experience.

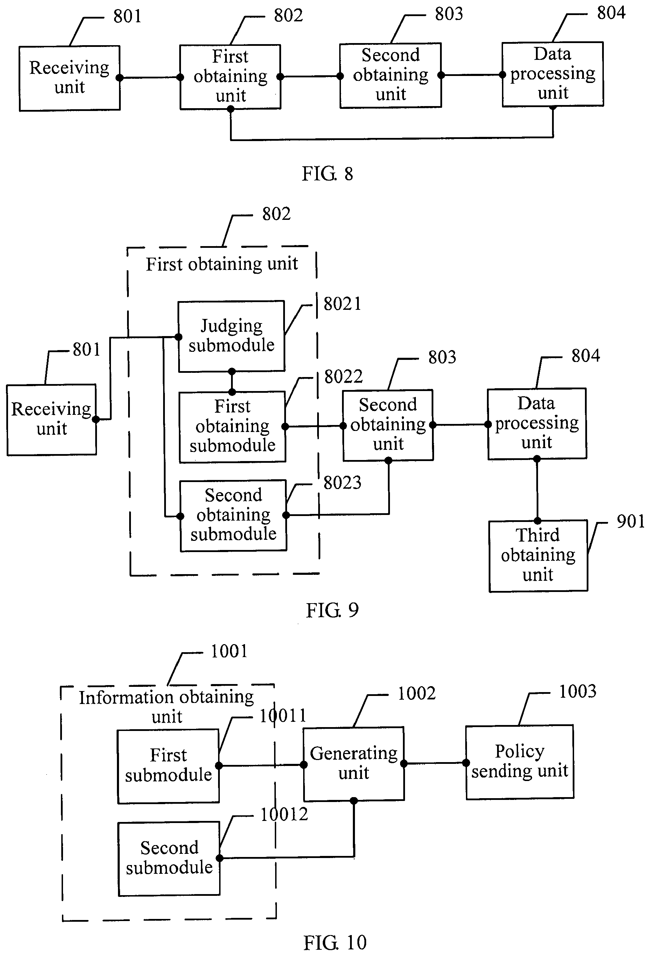

The method for data transmission according to the embodiment of the present invention is described above, a media processing device according to an embodiment of the present invention is introduced below, and the media processing device according to the embodiment of the present invention is located at a radio access network where a user equipment is located; referring to FIG. 8, an example of the media processing device according to the embodiment of the present invention includes:
a receiving unit 801, configured to, in the radio access network, receive a service request sent by the user equipment;
a first obtaining unit 802, configured to obtain service data corresponding to the service request received by the receiving unit 801;
a second obtaining unit 803, configured to obtain air interface resource information of a cell where the user equipment is located and/or transmission resource information; and
a data processing unit 804, configured to perform, according to the air interface resource information obtained by the second obtaining unit 803 and/or the transmission resource information obtained by the second obtaining unit 803, content adaptation and/or bit rate selection on the service data obtained by the first obtaining unit 802.

In this embodiment, when the user equipment initiates the service request to a network side to request that a service should be performed, the receiving unit 801 may obtain the service request sent by the user equipment; the service described in this embodiment and subsequent embodiments may specifically be a packet service, for example, in practical applications, may be a mobile data service, a video service, or an audio service, which is not specifically limited here.

It should be noted that, in this embodiment, the media processing device is located at the radio access network where the user equipment is located.

After the receiving unit 801 receives the service request, the first obtaining unit 802 may obtain the service data corresponding to the service request, and a specific manner of obtaining the service data is the same as the obtaining manner described in the foregoing method embodiment, which is not repeatedly described here.

After the first obtaining unit 802 obtains the service data, the second obtaining unit 803 may obtain air interface resource information of a cell where the user equipment is located and/or transmission resource information, that is, may obtain the air interface resource information of a cell where the user equipment is located, or obtain the transmission resource information, or obtain both the air interface resource information of a cell where the user equipment is located and the transmission resource information.

For example, the second obtaining unit 803 may obtain the information from an RNC, and may also obtain the information from another network element of the radio access network, such as an evolved base station, which is not specifically limited here.

After the second obtaining unit 803 obtains the air interface resource information and/or the transmission resource information, the data processing unit 804 performs content adaptation and/or bit rate selection on the service data, that is, may perform the content adaptation, or may perform the bit rate selection, or may perform both the content adaptation and the bit rate selection.

In this embodiment, the data processing unit 804 in the media processing device performs content adaptation and/or bit rate selection, and the media processing device is located at the radio access network, so it is more timely and precise to obtain radio air interface resource information and/or transmission resource information from the radio access network, thus increasing resource utilization.

For convenience of understanding, the media processing device according to the embodiment of the present invention is described below with another embodiment; specifically, referring to FIG. 9, another embodiment of the media processing device according to the embodiment of the present invention includes:
a receiving unit 801, configured to, in a radio access network, receive a service request sent by a user equipment;
a first obtaining unit 802, configured to obtain service data corresponding to the service request received by the receiving unit 801;
a second obtaining unit 803, configured to obtain air interface resource information of a cell where the user equipment is located and/or transmission resource information; and
a data processing unit 804, configured to perform, according to the air interface resource information obtained by the second obtaining unit 803 and/or the transmission resource information obtained by the second obtaining unit 803, content adaptation and/or bit rate selection on the service data obtained by the first obtaining unit 802.

The first obtaining unit 802 in this embodiment may specifically include:
a judging submodule 8021, configured to judge whether the service data is locally cached;
a first obtaining submodule 8022, configured to, when the judging submodule 9021 judges that the service data is not locally cached, obtain the service data from a CDN; and
a second obtaining submodule 8023, configured to, when the judging submodule 9021 judges that the service data is locally cached, obtain the service data locally.

In this embodiment, after the receiving unit 801 receives the service request sent by the user equipment, the service data corresponding to the service request may be determined, and then the judging submodule 8021 may judge whether the service data is stored, for example, judge whether the service data corresponding to the service request is cached locally.

When the judging submodule 8021 determines that the corresponding service data is not stored, the first obtaining submodule 8022 forwards the service request to the CDN.

Because the CDN may store the corresponding service data, after sending the service request to the CDN, the first obtaining submodule 8022 may receive the corresponding service data from the CDN.

When the judging submodule 8021 determines that the service data is stored, the second obtaining submodule 8023 may obtain the service data locally.

The media processing device in this embodiment may further include:
a third obtaining unit 901, configured to obtain a user policy from a PCRF entity.

The data processing unit 804 is configured to perform content adaptation and/or bit rate selection on the service data according to the air interface resource information and/or the transmission resource information and according to the user policy.

In this embodiment, the user policy may be generated by the PCRF entity according to terminal information of the user equipment.

For example, the terminal information may include information such as a terminal type, a terminal operating system, and/or a terminal software version, and the terminal information may be sent by a service platform to the PCRF entity, and may also be obtained by the PCRF entity through querying an equipment identity register (EIR) according to international mobile equipment identity (IMEI) information of a terminal, where the IMEI information of the terminal is sent by the RNC to the PCRF entity, which is not limited here.

After obtaining the terminal information, the PCRF entity may generate a user policy, and may perform corresponding service processing for different user priority information, and different QoS information according to the user policy.

It should be noted that, besides generating the user policy according to the terminal information, the PCRF entity may further obtain subscription information of the user from a home user register, and in combination with the subscription information, generate a user policy.

The third obtaining unit 901 may obtain the user policy generated by the PCRF entity from the PCRF entity.

After the second obtaining unit 803 obtains the air interface resource information and/or the transmission resource information, the data processing unit 804 may further, in combination with the user policy obtained by the third obtaining unit 901, or further in combination with service information, perform the content adaptation and/or the bit rate selection on the service data.

In this embodiment, a manner in which the third obtaining unit 901 obtains the user policy is consistent with the obtaining manner described in step 402 of the embodiment shown in FIG. 4, which is not repeated here.

In this embodiment, corresponding service processing may be performed according to the user policy for different user priority information, and different QoS information, so the data processing unit 804 may perform the content adaptation and/or the bit rate selection according to the air interface resource information and/or the transmission resource information, and according to the user policy.

In this embodiment, the data processing unit 804 in the media processing device performs content adaptation and/or bit rate selection, and the media processing device is located at the radio access network, so it is more timely and precise to obtain radio air interface resource information and/or transmission resource information from the radio access network, thus increasing resource utilization.

Secondly, when the media processing device stores service data which is requested by the user equipment and locally cached, the media processing device directly sends the stored service data to the user equipment through the radio access network, and because the media processing device is located at the radio access network where the user equipment is located, the service data does not need to be transmitted through a core network and a backbone transmission network, thus saving the bandwidth of the backbone transmission network and the traffic of the core network, reducing transmission costs, reducing a service delay, and improving user experience.

The media processing device according to the embodiment of the present invention is described above, and a PCRF entity is introduced below; referring to FIG 10, a specific example of a PCRF entity according to an embodiment of the present invention includes:
an information obtaining unit 1001, configured to obtain terminal information of a user equipment;
a generating unit 1002, configured to, according to the terminal information obtained by the information obtaining unit 1001, generate a user policy; and
a policy sending unit 1003, configured to send the user policy generated by the generating unit 1002 to a media processing device, where the media processing device is located at a radio access network where the user equipment is located.

In this embodiment, after the user equipment initiates a service request, the information obtaining unit 1001 may obtain the terminal information of the user equipment.

In this embodiment, the obtaining the terminal information of the user equipment may be implemented in diverse manners, and specifically, is the same as the content described in the foregoing method embodiment, which is not repeatedly described here.

After the information obtaining unit 1001 obtains the terminal information, the generating unit 1002 may generate a user policy, and may perform corresponding service processing for different user priority information, and different QoS information according to the user policy.

It should be noted that, besides generating the user policy according to the terminal information, the generating unit 1002 may further obtain subscription information of the user from a home user register, and in combination with the subscription information, generate a user policy.

After the generating unit 1002 generates the user policy, the policy sending unit 1003 may send the user policy to the media processing device, so that the media processing device may perform content adaptation and/or bit rate selection according to the user policy, and further in combination with air interface resource information and/or transmission resource information.

It should be noted that, in this embodiment, the media processing device is located at the radio access network where the user equipment is located.

In this embodiment, a manner in which the policy sending unit 1003 sends the user policy is consistent with the sending manner described in step 503 of the embodiment shown in FIG. 5, which is not repeatedly described here.

The information obtaining unit 1001 in this embodiment includes at least one of the following submodules:
a first submodule 10011, configured to receive terminal information sent by a service platform; and
a second submodule 10012, configured to receive IMEI information sent by the radio access network, and query corresponding terminal information in an EIR according to the IMEI information.

In this embodiment, specifically, the RNC may report the IMEI information to the PCRF entity, and it can be understood that, in practical applications, likewise, another network element of the radio access network may report the IMEI information to the PCRF entity.

In this embodiment, the generating unit 1002 generates a user policy and the policy sending unit 1003 sends the user policy to the media processing device, so that the media processing device can perform content adaptation and/or bit rate selection on the service data according to the user policy, and further in combination with air interface resource information and/or transmission resource information, so as to increase resource utilization.

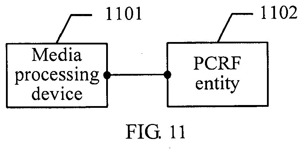

Referring to FIG. 11, a specific example of a system for data transmission according to an embodiment of the present invention includes:
a media processing device 1101 and a PCRF entity 1102.

The media processing device 1101 in this embodiment is specifically configured to: in a radio access network, receive a service request sent by a user equipment; obtain service data corresponding to the service request; obtain air interface resource information of a cell where the user equipment is located and/or transmission resource information; and perform content adaptation and/or bit rate selection on the service data according to the obtained air interface resource information and/or transmission resource information.

The PCRF entity 1102 in this embodiment is specifically configured to: obtain terminal information of the user equipment; generate a user policy according to the obtained terminal information; and send the generated user policy to the media processing device, where the media processing device is located at a radio access network where the user equipment is located.

The content of the media processing device 1101 in this embodiment is the same as the content shown in FIG. 8 or FIG. 9, which is not repeatedly described here.

The content of the PCRF entity 1102 in this embodiment is the same as the content shown in FIG. 10, which is not repeatedly described here.

In this embodiment, the media processing device 1101 performs content adaptation and/or bit rate selection, and the media processing device 1101 is located at the radio access network, so it is more timely and precise to obtain radio air interface resource information and/or transmission resource information from the radio access network, thus increasing resource utilization.

Secondly, when the media processing device 1101 stores service data which is requested by the user equipment and locally cached, the media processing device 1101 directly sends the stored service data to the user equipment through the radio access network, and because the media processing device 1101 is located at the radio access network where the user equipment is located, the service data does not need to be transmitted through a core network and a backbone transmission network, thus saving the bandwidth of the backbone transmission network and the traffic of the core network, reducing transmission costs, reducing a service delay, and improving user experience.

The specific operation of performing data transmission by using the device and the system that are described in device and system embodiments of the present invention is similar to that described in the foregoing method embodiments of the present invention, which is not repeatedly described here.

Further embodiments of the present invention are provided in the following. It should be noted that the numbering used in the following section does not necessarily need to comply with the numbering used in the previous sections.
Embodiment 1. A method for data transmission, characterized by comprising:
   receiving, by a media processing device, a service request sent by a user equipment, wherein the media processing device is located at a radio access network where the user equipment is located;
   obtaining, by the media processing device, service data corresponding to the service request;
   obtaining, by the media processing device, air interface resource information of a cell where the user equipment is located and/or transmission resource information; and
   performing, by the media processing device, content adaptation and/or bit rate selection on the service data according to the obtained air interface resource information and/or transmission resource information.
Embodiment 2. The method according to embodiment 1, further comprising:
   obtaining, by the media processing device, a user policy from a policy and charging rules function (PCRF) entity; and
   performing, by the media processing device, bit rate selection on the service data according to the air interface resource information and/or the transmission resource information and according to the user policy.
Embodiment 3. The method according to embodiment 1, further comprising:
   obtaining, by the media processing device, a user policy from a PCRF entity; and
   performing, by the media processing device, content adaptation on the service data according to the air interface resource information and/or the transmission resource information and according to the user policy.
Embodiment 4. The method according to embodiment 1, wherein the obtaining, by the media processing device, the air interface resource information of the cell where the user equipment is located comprises:
   obtaining a cache occupancy rate of a buffer of a radio link control (RLC) layer.
Embodiment 5. The method according to embodiment4, wherein the performing, by the media processing device, the bit rate selection according to the obtained air interface resource information comprises:
   when the cache occupancy rate of the buffer of the RLC layer is higher than a preset first threshold, reducing a bit rate of the service data; and
   when the cache occupancy rate of the buffer of the RLC layer is lower than a preset second threshold, increasing the bit rate of the service data, wherein
   the first threshold is greater than the second threshold.
Embodiment 6. The method according to embodiment 2 or 3, wherein the obtaining, by the media processing device, the user policy from the PCRF entity comprises:
   receiving, by the media processing device, a radio access bearer (RAB) allocation request sent by the PCRF, and obtaining an allocation/retention priority (ARP) carried in the RAB allocation request; or
   receiving, by the media processing device, an evolved radio access bearer (eRAB) allocation request sent by the PCRF, and obtaining an allocation/retention priority (ARP) carried in the eRAB allocation request.
Embodiment 7. The method according to any one of embodiments 1 to 5, wherein the obtaining, by the media processing device, the service data corresponding to the service request comprises:
   judging, by the media processing device, whether the service data is stored;
   if the service data is not stored, obtaining, by the media processing device, the service data from a content distributed network (CDN); and
   if the service data is stored, obtaining, by the media processing device, the service data locally.
Embodiment 8. The method according to embodiment 2 or 3, wherein before the obtaining, by the media processing device, the user policy from the PCRF entity, the method comprises:
   obtaining, by the PCRF entity, terminal information of the user equipment;
   generating, by the PCRF entity, the user policy according to the terminal information; and sending, by the PCRF entity, the user policy to the media processing device.
Embodiment 9. The method according to embodiment 8, wherein the obtaining, by the PCRF entity, the terminal information of the user equipment comprises:
   receiving, by the PCRF entity, the terminal information sent by a service platform; or
   receiving, by the PCRF entity, international mobile equipment identity (IMEI) information of the user equipment, wherein the IMEI information of the user equipment is sent by the radio access network; and
   obtaining, by the PCRF entity, corresponding terminal information through querying in an equipment identity register (EIR) according to the IMEI information.
Embodiment 10. A method for data transmission, characterized by comprising:
   obtaining, by a policy and charging rules function (PCRF) entity, terminal information of a user equipment;
   generating, by the PCRF entity, a user policy according to the terminal information; and
   sending, by the PCRF entity, the user policy to a media processing device, wherein the media processing device is located at a radio access network where the user equipment is located.
Embodiment 11. The method according to embodiment 10, wherein the obtaining, by the PCRF entity, the terminal information of the user equipment comprises:
   receiving, by the PCRF entity, the terminal information sent by a service platform; or
   receiving, by the PCRF entity, international mobile equipment identity (IMEI) information of the user equipment, wherein the IMEI information of the user equipment is sent by the radio access network; and
   obtaining, by the PCRF entity, corresponding terminal information through querying in an equipment identity register (EIR) according to the IMEI information.
Embodiment 12. A media processing device, characterized in that the media processing device is located at a radio access network where a user equipment is located, and the media processing device comprises:
   a receiving unit, configured to receive a service request sent by the user equipment;
   a first obtaining unit, configured to obtain service data corresponding to the service request received by the receiving unit;
   a second obtaining unit, configured to obtain air interface resource information of a cell where the user equipment is located and/or transmission resource information; and
   a data processing unit, configured to perform, according to the air interface resource information obtained by the second obtaining unit and/or the transmission resource information obtained by the second obtaining unit, content adaptation and/or bit rate selection on the service data obtained by the first obtaining unit.
Embodiment 13. The media processing device according to embodiment12, wherein the first obtaining unit comprises:
   a judging submodule, configured to judge whether the service data is stored;
   a first obtaining submodule, configured to, when the judging submodule judges that the service data is not stored, obtain the service data from a content distributed network (CDN); and
   a second obtaining submodule, configured to, when the judging submodule judges that the service data is stored, obtain the service data locally.
Embodiment 14. The media processing device according to embodiment 12 or 13, further comprising:
   a third obtaining unit, configured to obtain a user policy from a policy and charging rules function (PCRF) entity, wherein
   the data processing unit is further configured to perform content adaptation and/or bit rate selection on the service data according to the air interface resource information and/or the transmission resource information and according to the user policy.
Embodiment 15. A policy and charging rules function (PCRF) entity, characterized by comprising:
   an information obtaining unit, configured to obtain terminal information of a user equipment;
   a generating unit, configured to, according to the terminal information obtained by the information obtaining unit, generate a user policy; and
   a policy sending unit, configured to send the user policy generated by the generating unit to a media processing device, wherein the media processing device is located at a radio access network where the user equipment is located.
Embodiment 16. The PCRF entity according to embodiment 15, wherein the information obtaining unit comprises at least one of the following submodules:
   a first submodule, configured to receive terminal information sent by a service platform; and
   a second submodule, configured to receive international mobile equipment identity (IMEI) information of the user equipment, wherein the IMEI information of the user equipment is sent by the radio access network, and obtain corresponding terminal information through querying in an EIR according to the IMEI information.
Embodiment 17. A system for data transmission, characterized by comprising:
   the media processing device according to any one of embodiments 12 to 14, and the PCRF entity according to embodiment 15 or 16.

Persons of ordinary skill in the art may understand that all or part of the steps of the method according to the foregoing embodiments may be implemented by a program instructing relevant hardware. The program may be stored in a computer readable storage medium, and the foregoing storage medium may be a read only memory, a magnetic disk, or an optical disk.

The method, the system and the relevant device for data transmission according to the present invention are introduced in detail above. Persons of ordinary skill in the art can make variations and modifications to the present invention in terms of the specific implementations and application scopes according to the ideas of the embodiments of the present invention. To sum up, the specification shall not be construed as limitations to the present invention.

## Claims

1. A method for data transmission, comprising:
receiving (301), by a media processing device, a service request sent by a user equipment;
obtaining (302), by the media processing device, service data corresponding to the service request;
obtaining (303), by the media processing device, at least one of air interface resource information of a cell where the user equipment is located and transmission resource information; and
performing (304), by the media processing device, content adaptation and/or bit rate selection on the service data according to at least of the obtained air interface resource information and transmission resource information;
wherein the media processing device is located at a radio access network where the user equipment is located.

2. The method according to claim 1, further comprising:
obtaining, by the media processing device, a user policy from a policy and charging rules function, PCRF, entity;
wherein the performing (304), by the media processing device, content adaptation and/or bit rate selection on the service data according to at least one of the obtained air interface resource information and transmission resource information comprises:
performing, by the media processing device, bit rate selection on the service data according to the air interface resource information and the transmission resource information and according to the user policy; and/or
performing, by the media processing device, content adaptation on the service data according to the air interface resource information and the transmission resource information and according to the user policy.

3. The method according to claim 2, wherein the media processing device is integrated in an evolved base station;
the obtaining, by the media processing device, the user policy from the PCRF entity comprises:
receiving, by the media processing device, an evolved radio access bearer, eRAB, allocation request sent by the PCRF, and obtaining an allocation/retention priority, ARP, used as the user policy, carried in the eRAB allocation request.

4. The method according to claim 2, wherein the media processing device is implemented independently from a base station in the radio access network,
the obtaining, by the media processing device, the user policy from the PCRF entity comprises:
obtaining, by the media processing device, said ARP, used as the user policy, from the base station, wherein the ARP is sent by the PCRF and forwarding by the base station.

5. The method according to any one of claims 1 to 4, wherein the obtaining, by the media processing device, the air interface resource information of the cell where the user equipment is located comprises:
obtaining a cache occupancy rate of a buffer of a radio link control, RLC, layer; and
wherein the performing, by the media processing device, the bit rate selection according to the obtained air interface resource information comprises:
when the cache occupancy rate of the buffer of the RLC layer is higher than a preset first threshold, reducing a bit rate of the service data; and
when the cache occupancy rate of the buffer of the RLC layer is lower than a preset second threshold, increasing the bit rate of the service data, wherein
the first threshold is greater than the second threshold.

6. A method for data transmission, comprising:
obtaining, by a policy and charging rules function, PCRF, entity, terminal information of a user equipment;
generating, by the PCRF entity, a user policy according to the terminal information; and
sending, by the PCRF entity, the user policy to a media processing device which is located at a radio access network where the user equipment is located, wherein the user policy is used for content adaptation and/or bit rate selection on service data .

7. The method according to claim 6, wherein the obtaining, by the PCRF entity, the terminal information of the user equipment comprises:
receiving, by the PCRF entity, the terminal information from a service platform; or
receiving, by the PCRF entity, international mobile equipment identity, IMEI, information of the user equipment, wherein the IMEI information of the user equipment is sent by the radio access network; and obtaining, by the PCRF entity, corresponding terminal information through querying in an equipment identity register, EIR, according to the IMEI information.

8. A media processing device, wherein the media processing device is located at a radio access network where a user equipment is located, and the media processing device comprises:
a receiving unit (801), configured to receive a service request sent by the user equipment;
a first obtaining unit (802), configured to obtain service data corresponding to the service request received by the receiving unit (801);
a second obtaining unit (803), configured to obtain at least one of air interface resource information of a cell where the user equipment is located and transmission resource information; and
a data processing unit (804), configured to perform, according to the air interface resource information obtained by the second obtaining unit (803) and the transmission resource information obtained by the second obtaining unit (803), content adaptation and/or bit rate selection on the service data obtained by the first obtaining unit (802).

9. The media processing device according to claim 8, further comprising:
a third obtaining unit (901), configured to obtain a user policy from a policy and charging rules function, PCRF, entity, wherein
the data processing unit (804) is further configured to perform bit rate selection on the service data according to the air interface resource information and the transmission resource information and according to the user policy; and/or content adaptation on the service data according to the air interface resource information and the transmission resource information and according to the user policy.

10. The media processing device according to claim 9, wherein the media processing device is integrated in an evolved base station; and
the third obtaining unit (901) is specifically configured to receive an evolved radio access bearer, eRAB, allocation request sent by the PCRF, and obtain an said ARP, used as the user policy, carried in the eRAB allocation request.

11. The media processing device according to claim 9, wherein the media processing device is implemented independently from a base station in the radio access network; and
the third obtaining unit (901) is specifically configured to obtain said ARP, used as the user policy from the base station, wherein the ARP is sent by the PCRF and forwarding by the base station.

12. A policy and charging rules function, PCRF, entity (1102), comprising:
an information obtaining unit (1001), configured to obtain terminal information of a user equipment;
a generating unit (1002), configured to, according to the terminal information obtained by the information obtaining unit (1001), generate a user policy; and
a policy sending unit (1003), configured to send the user policy generated by the generating unit (1002) to a media processing device which is located at a radio access network where the user equipment is located, wherein the user policy is used for content adaptation and/or bit rate selection on service data.

13. The PCRF entity for data transmission according to claim 12, wherein the information obtaining unit (1001) in the PCRF entity (1102) comprises at least one of the following submodules:
a first submodule (10011), configured to receive terminal information sent by a service platform; and
a second submodule (10012), configured to receive international mobile equipment identity, IMEI, information of the user equipment, wherein the IMEI information of the user equipment is sent by the radio access network, and obtain corresponding terminal information through querying in an equipment identity register, EIR, according to the IMEI information.

14. A computer program product, comprising a group of program code, used for performing the method according to any one of claims 1-7.

15. A communications system, comprises the media processing device according to any one of claims 1 to 5, and the policy and charging rules function, PCRF, entity according to claim 6 or 7.
